# EUROPÄISCHE PATENTANMELDUNG

(11) **EP 4 750 147 A1**
(43) Date of publication of application: **27.05.2026**
(21) Application number: 23945850.8
(22) Date of filing: 18.07.2023
(51) Int. Cl.: H04W 28/24

(54) **TERMINAL, WIRELESS BASE STATION, AND WIRELESS COMMUNICATION METHOD**

(71) Applicant: NTT DOCOMO, INC., Tokyo 100-6150 (JP)
(72) Inventor: ECHIGO Haruhi, Tokyo 100-6150 (JP); MATSUMURA Yuki, Tokyo 100-6150 (JP); OKAMURA Masaya, Tokyo 100-6150 (JP); SHIMA Kousuke, Tokyo 100-6150 (JP); NAGATA Satoshi, Tokyo 100-6150 (JP)
(74) Representative: Hoffmann Eitle
(86) International application number: PCT/JP2023/026318
(87) International publication number: WO 2025/017847

(57) **Abstract**

A terminal receives, from a radio base station, acceptance information indicating whether or not a quality guaranteed communication, where a specific communication quality is guaranteed in a mobile communication network, is accepted, and executes a connection with the mobile communication network when the quality guaranteed communication is accepted.

## Description

### TECHNICAL FIELD

The present disclosure relates to a terminal, a radio base station, and a radio communication method that support communication quality guarantees.

### BACKGROUND ART

The 3rd Generation Partnership Project (3GPP: registered trademark) has prepared a specification for the 5th generation mobile communication system (also called 5G, New Radio (NR), or Next Generation (NG)) and is also preparing a next generation specification called Beyond 5G, 5G Evolution, or 6G.

In 5G, realization of reliability of ultra-reliable and low latency communications (URLLC) up to 99.9999% has been considered, and in 6G, a further improvement of one digit (99.99999%) is assumed as a target value (Non-patent literature 1).

### CITATION LIST

### NON-PATENT LITERATURE

Non-Patent Literature 1: NTT DOCOMO, "DOCOMO 6G Whitepaper 5.0 Version", [online], July 2023, Internet <URL: https://www.docomo.ne.jp/binary/pdf/corporate/technology/whit epaper_6g/DOCOMO_6G_White_PaperJP_20221116.pdf>

### SUMMARY OF INVENTION

5G and 6G mobile communication services including URLLC are basically public network type services for an unspecified large number of users, and service provision is fundamentally based on best-effort.

It has been an issue that mobile communication networks based on the best-effort type service cannot cope with a short-term and explosive increase in traffic volume that may occur when terminals (User Equipment, UEs) are densely packed in a specific area, for example, at an event or concert

In view of this situation, it is considered that a mechanism for guaranteeing a certain level of communication quality to a specific UE becomes more important. Meanwhile, a UE for which a communication quality is guaranteed, and a normal UE for which communication quality is not guaranteed, coexist in a mobile communication network.

Thus, while reserving radio resources for UEs for which a communication quality is guaranteed, it is required to provide a best-effort service to a larger number of normal UEs, in other words, to provide coexistence of quality guaranteed UEs and normal UEs at a high level.

Thus, the disclosure is made in view of this situation, and an object thereof is to provide a terminal, a radio base station and a radio communication method capable of ensuring a certain level of communication quality guarantee while aiming coexistence at a high level with a terminal whose communication quality is not guaranteed.

An aspect of the present disclosure is a terminal (UE 200A) including: a reception unit (control signal and reference signal processing unit 240) that receives, from a radio base station, acceptance information indicating whether or not a quality guaranteed communication, where a specific communication quality is guaranteed in a mobile communication network, is accepted; and a control unit (control unit 270) that executes a connection with the mobile communication network when the quality guaranteed communication is accepted.

An aspect of the present disclosure is a terminal (UE 200A) including: a reception unit (control signal and reference signal processing unit 240) that receives, from a radio base station, condition information indicating a guarantee condition with which a specific communication quality is guaranteed in a mobile communication network; and a control unit (control unit 270) that executes a connection with the mobile communication network, based on the guarantee condition indicated by the condition information.

### BRIEF DESCRIPTION OF DRAWINGS

[FIG. 1] FIG. 1 is an overall schematic configuration diagram of a radio communication system 10.
[FIG. 2] FIG. 2 is a diagram illustrating a configuration example of a radio frame, subframes, and slots used in the radio communication system 10.
[FIG. 3] FIG. 3 is a functional block diagram of gNB 100, UE 200A, and UE 200B.
[FIG. 4] FIG. 4 is a diagram illustrating a communication sequence example (part 1) between a UE and a gNB according to operation example 1 of a first embodiment.
[FIG. 5] FIG. 5 is a diagram illustrating a communication sequence example (part 2) between the UE and the gNB according to operation example 1 of the first embodiment.
[FIG. 6] FIG. 6 is a diagram illustrating a communication sequence example (part 3) between the UE and the gNB according to operation example 1 of the first embodiment.
[FIG. 7] FIG. 7 is a diagram illustrating a correspondence example between IDs and minimum quality guarantee requests according to operation example 2 of the first embodiment.
[FIG. 8] FIG. 8 is a diagram illustrating a correspondence example between IDs and minimum quality guarantee permissions according to operation example 2 of the first embodiment.
[FIG. 9] FIG. 9 is a diagram illustrating an assignment example of a resource for minimum quality guarantee permission notification according to operation example 2 of the first embodiment.
[FIG. 10] FIG. 10 is a diagram illustrating an assignment example of a resource for minimum quality guarantee according to operation example 3 of the first embodiment.
[FIG. 11] FIG. 11 is a diagram illustrating a configuration example of a cell for minimum quality guarantee according to operation example 3 of the first embodiment, and a cell for both types of UEs, other/non-minimum quality guaranteed UEs and minimum quality guaranteed UEs.
[FIG. 12] FIG. 12 is a diagram illustrating an example of a minimum quality guarantee period according to operation example 4 of the first embodiment.
[FIG. 13] FIG. 13 is a diagram illustrating a display example (smartphone) for causing a user to recognize that the user is in a minimum quality guarantee period according to operation example 4 of the first embodiment.
[FIG. 14] FIG. 14 is a diagram illustrating a display example (smartwatch) for causing a user to recognize that the user is in a minimum quality guarantee period according to operation example 4 of the first embodiment.
[FIG. 15] FIG. 15 is a diagram illustrating a communication sequence example (part 1) between a UE and a gNB according to operation example 6 of the first embodiment.
[FIG. 16] FIG. 16 is a diagram illustrating a communication sequence example (part 2) between a UE and a gNB according to operation example 6 of the first embodiment.
[FIG. 17] FIG. 17 is a diagram illustrating a configuration example of SSBs according to operation example 1-1 of a second embodiment.
[FIG. 18] FIG. 18 is a diagram illustrating an allocation example of normal cells and High priority UE dedicated cells according to operation example 1 of the second embodiment.
[FIG. 19] FIG. 19 is a diagram illustrating a hardware configuration example of the gNB 100, the UE 200A, and the UE 200B.
[FIG. 20] FIG. 20 is a diagram illustrating a configuration example of a vehicle 2001.

### DESCRIPTION OF EMBODIMENT

Embodiments will be described below with reference to the drawings. Note that the same or similar reference numerals have been attached to the same functions and configurations, and descriptions thereof will be omitted as appropriate.

### (1) Overall schematic configuration of radio communication system

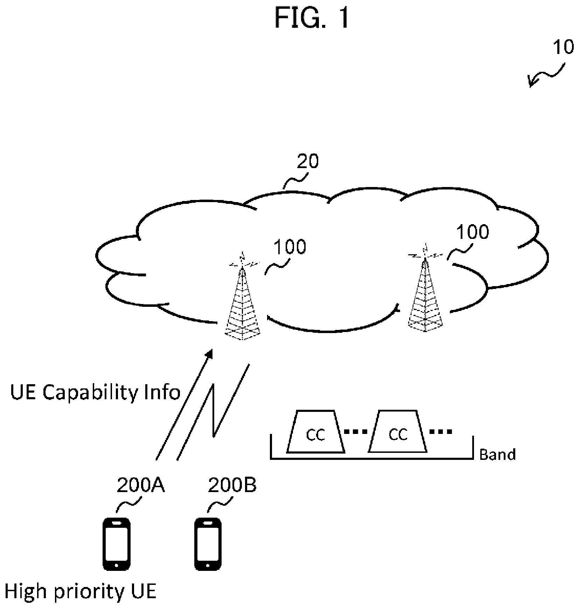

FIG. 1 is an overall schematic configuration diagram of a radio communication system 10 according to an embodiment. The radio communication system 10 is compliant with a radio communication system called Beyond 5G, 5G Evolution, or 6G (hereinafter referred to as 6G), and includes a Radio Access Network 20 (hereinafter referred to as a RAN 20, a terminal 200A, and a terminal 200B (User Equipment 200A, 200B, hereinafter UE 200A, UE 200B). Note that the radio communication system 10 may be compliant with specifications other than 6G, such as 5G New Radio (NR).

The RAN 20 includes a radio base station 100 (hereinafter, gNB 100). Note that the specific configuration of the radio communication system 10, including the number of the gNBs and the UEs, is not limited to the example illustrated in FIG. 1.

The RAN 20 actually includes multiple RAN nodes, specifically gNBs (or ng-eNBs), and is connected to a 6G-compliant core network. Note that the RAN 20 and the core network may be expressed simply as a "network". The network formed by the UE 200A, the UE 200B, the RAN 20 (including the gNB 100), and the core network may be referred to as a P ublic Land Mobile Network (PLMN).

The gNB 100 is a 6G-compliant radio base station, and performs radio communication according to 6G with the UE 200A and the UE 200B. The gNB 100, the UE 200A, and the UE 200B can support Massive MIMO generating a beam BM with higher directivity by controlling radio signals transmitted from multiple antenna elements, carrier aggregation (CA) bundling and using multiple component carriers (CCs), and dual connectivity (DC) performing simultaneous communication between the UE and each of the NG-RAN Nodes.

The type of DC may be Multi-RAT Dual Connectivity (MR-DC) that utilizes multiple radio access technologies, or Dual Connectivity that utilizes only 6G. In MR-DC, one of the gNBs may configure a master node (MN), and another gNB may configure a secondary node (SN).

The radio communication system 10 may support multiple frequency ranges (FRs). Specifically, the radio communication system 10 may support the following FRs.
· FR1: 410 MHz to 7.125 GHz
· FR2:
   · FR2-1: 24.25 GHz to 52.6 GHz
   · FR2-2: above 52.6 GHz to 71 GHz

In FR1, a Sub-Carrier Spacing (SCS) of 15, 30, or 60 kHz is used, and a bandwidth (BW) of 5 to 100 MHz may be used. FR2 is a higher frequency than FR1, an SCS of 60 or 120 kHz (240 kHz may be included) is used, and a bandwidth (BW) of 50 to 400 MHz may be used.

The radio communication system 10 may also support a frequency band higher than that of FR2. Specifically, the radio communication system 10 can support a frequency band above 52.6 GHz and up to 114.25 GHz.

Cyclic Prefix-Orthologous Frequency Division Multiplexing (CP-OFDM) or Discrete Fourier Transform-Spread (DFT-S-OFDM) having a larger Sub-Carrier Spacing (SCS) may be applied. DFT-S-OFDM may also be applied for a downlink (DL) as well as an uplink (UL).

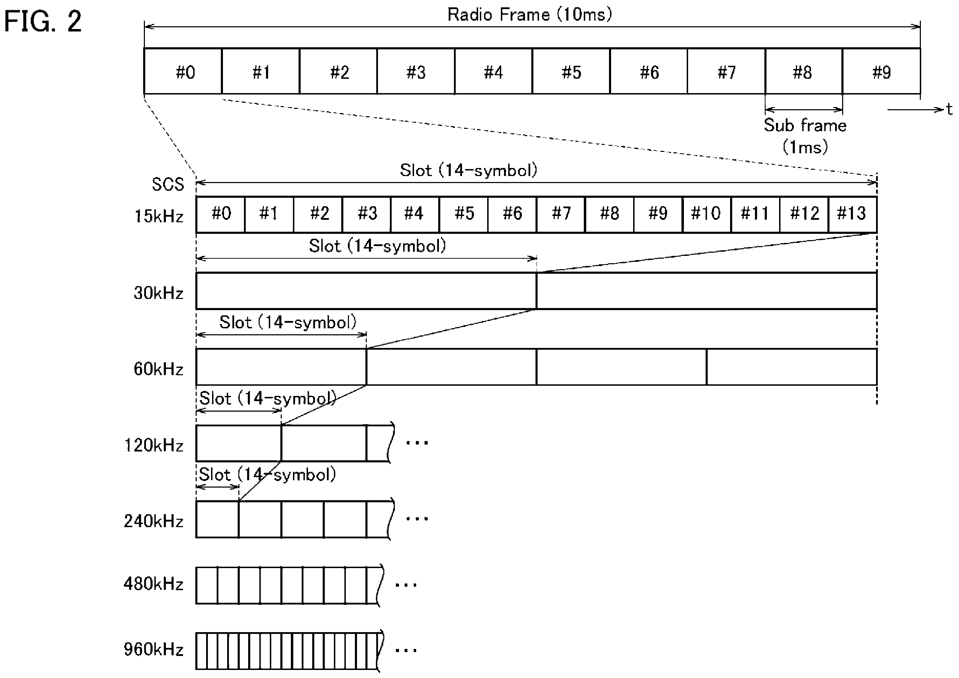

Fig. 2 illustrates a configuration example of a radio frame, subframes, and slots used in the radio communication system 10.

As illustrated in FIG. 2, one slot consists of 14 symbols, and the symbol period (and the slot period) gets shorter as the SCS gets larger (wider). Note that the number of symbols constituting one slot does not necessarily have to be 14 (for example, it may be 28 or 56 symbols). Furthermore, the number of slots per subframe may vary depending on the SCS. Furthermore, the SCS may be wider than 240 kHz (for example, 480 kHz or 960 kHz as illustrated in FIG. 2).

Note that a time direction (t) in FIG. 2 may be called a time domain, a symbol period, a symbol time, or the like. A frequency direction may be called a frequency domain, a resource block (RB), a resource block group (RBG), a sub-carrier, a BWP (Bandwidth Part), or the like.

In the radio communication system 10, a mechanism for guaranteeing a certain communication quality may be introduced relative to the UE 200A and the UE 200B. The certain communication quality may simply mean the minimum communication quality that can be guaranteed, but it is not necessarily limited to the minimum communication quality. For example, multiple communication qualities having different levels may be selectively guaranteed according to network conditions or the like, or communication qualities having different levels may be guaranteed according to UE capabilities or the like.

Communication quality guarantee may mean that a service having the communication quality is always available during a guarantee period. In this sense, a service whose communication quality is guaranteed may be interpreted as a service which is the opposite of a best-effort type service. However, the level of communication quality does not matter, and for example, ultra reliable and low latency communications (URLLC) are a best-effort type service where the level of communication quality available is relatively high, but the communication quality is not always guaranteed. In contrast, when a communication quality is always available even if the level of the communication quality is low, the service can be said to guarantee the communication quality.

The content of the communication quality is not particularly limited, but typically includes throughput, latency, and the number of simultaneous UE connections. Specific examples of the communication quality will be described below.

In the present embodiment, different communication qualities may be guaranteed between the UE 200A and the UE 200B. Alternatively, only one of the UEs may be subject to communication quality guarantee.

A UE subject to communication quality guarantee may be called a High priority UE (high priority terminal). A High priority UE may be read as a UE with a guaranteed communication quality, a UE requiring communication quality guarantee, a UE with a guaranteed minimum quality, or a UE supporting a quality guarantee function.

A UE not subject to communication quality guarantee may be called a Low priority UE (low priority terminal). A Low priority UE may be read as a UE without a guaranteed communication quality, a UE not requiring communication quality guarantee, a non-guaranteed UE, or a UE not supporting a quality guarantee function.

The UE 200A (also the UE 200B) may operate as a High priority UE or a Low priority UE according to a capability (Capability) or state of the UE 200A. That is, whether the UE 200A is a High priority UE or not may be dynamically changed.

### (2) Functional block configuration of radio communication system

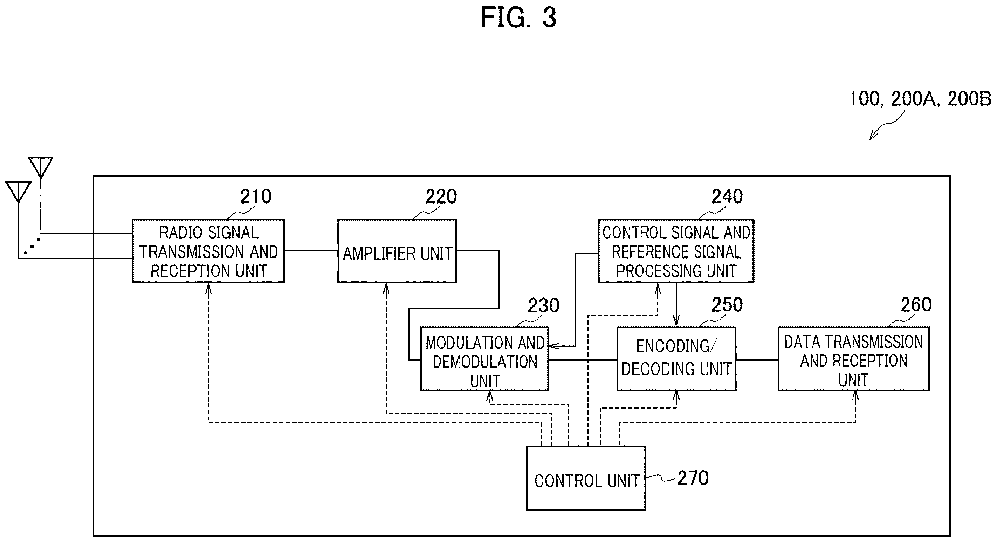

Next, a functional block configuration of the radio communication system 10 will be described. Specifically, a function block configuration of the UE 200A will be described. FIG. 3 is a functional block configuration diagram of the gNB 100, the UE 200A, and the UE 200B.

As illustrated in FIG. 3, the UE 200A (also UE 200B) includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

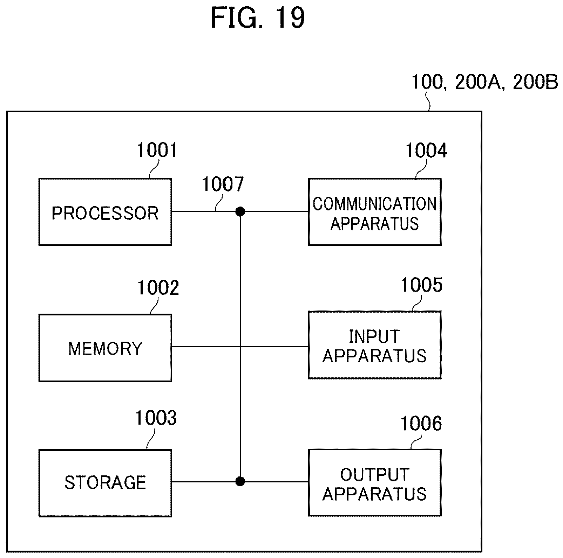

Note that only the main functional blocks related to the description of the embodiments are illustrated in FIG. 3, and the UE 200A (gNB 100) has other functional blocks (for example, a power supply unit, etc). FIG. 3 illustrates a functional block configuration of the UE 200A. For the hardware configuration, refer to FIG. 19.

The radio signal transmission and reception unit 210 transmits and receives radio signals according to 6G. The radio signal transmission and reception unit 210 can support massive MIMO, generating a beam with higher directivity by controlling radio (RF) signals transmitted from multiple antenna elements, carrier aggregation (CA) bundling and using multiple component carriers (CCs), and dual connectivity (DC) performing simultaneous communication between the UE and each of two NG-RAN Nodes.

In the present embodiment, the UE 200A can operate as a High priority UE (high priority terminal) for which a communication quality is guaranteed, or a Low priority UE (low priority terminal) for which the communication quality is not guaranteed. The radio signal transmission and reception unit 210 may perform radio communication for High priority UEs for which a specific communication quality is guaranteed in a mobile communication network, by using a radio resource distinguished from for Low priority UEs. In the present embodiment, the radio signal transmission and reception unit 210 may constitute a communication unit.

Radio resources for High priority UEs may be exclusively reserved separately from radio resources for Low priority UEs (or may be for other than High priority UEs). However, a part of the radio resources may be shared with a Low priority UE. The radio resources may include a resource in any domain where radio communication can be performed, such as a time domain, a frequency domain, or a space domain. The unit of radio resources is not particularly limited.

The amplifier unit 220 includes a PA (Power Amplifier) / an LNA (Low Noise Amplifier). The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation / demodulation, transmission power configuration, resource block allocation, or the like for each predetermined communication destination (gNB 100 or the like). In the modulation and demodulation unit 230, Cyclic Prefix-Orthogonal Frequency Division Multiplexing (CP-OFDM) or Discrete Fourier Transform-Spread (DFT-S-OFDM) may be applied. DFT-S-OFDM may also be used for a downlink (DL) as well as an uplink (UL).

The control signal and reference signal processing unit 240 performs processing regarding various control signals transmitted and received by the UE 200A, and processing regarding various reference signals transmitted and received by the UE 200A.

Specifically, the control signal and reference signal processing unit 240 receives various control signals transmitted from the gNB 100 via a predetermined control channel, for example, a control signal of a radio resource control (RRC) layer. The control signal and reference signal processing unit 240 also transmits various control signals to the gNB 100 via a predetermined control channel.

The control signal and reference signal processing unit 240 performs processing using a reference signal (RS), such as a Demodulation Reference Signal (DMRS) and a Phase Tracking Reference Signal (PTRS).

The DMRS is a reference signal (pilot signal) specific to a terminal, known between a base station and a terminal for estimating a fading channel used for data demodulation. The PTRS is a reference signal specific to the UE 200 for the purpose of estimating phase noise, which becomes an issue in a high frequency band.

Note that the reference signal may include a Channel State Information-Reference Signal (CSI-RS), a Sounding Reference Signal (SRS), and a Positioning Reference Signal (PRS) for positional information, in addition to the DMRS and the PTRS.

The channel includes a control channel and a data channel. The control channel may include a PDCCH (Physical Downlink Control Channel), a PUCCH (Physical Uplink Control Channel), an RACH (Random Access Channel), Downlink Control Information (DCI) including a Random Access Radio Network Temporary Identifier (RA-RNTI), a Physical Broadcast Channel (PBCH), or the like.

The data channel includes a PDSCH, a PUSCH, and the like. Data here may mean data that is transmitted via a data channel.

The control signal and reference signal processing unit 240 may receive from a network (specifically, gNB 100) a guarantee permission indicating that a specific communication quality in a mobile communication network is guaranteed. In the present embodiment, the control signal and reference signal processing unit 240 may constitute a reception unit for receiving a guarantee permission.

The guarantee permission may be for the minimum communication quality guaranteed in a mobile communication network, or may be for at least one of multiple communication qualities of different levels. The guarantee permission may be transmitted using lower layer signaling (for example, DCI) or higher layer signaling (for example, RRC).

The control signal and reference signal processing unit 240 may transmit, to the gNB 100, a guarantee request requesting guarantee of a specific communication quality in a mobile communication network. In the present embodiment, the control signal and reference signal processing unit 240 may constitute a transmission unit for transmitting a guarantee request. The guarantee request may also be transmitted using lower layer signaling or higher layer signaling.

The control signal and reference signal processing unit 240 may transmit a guarantee request including at least one of a guarantee period, a start timing, an end timing, a guarantee priority, or a guarantee target, of a specific communication quality. The gNB 100 may transmit the above-described guarantee permission to the UE 200A in response to the guarantee request transmitted from the UE 200A. Specific examples of the guarantee request and the guarantee permission will be described below.

Further, the control signal and reference signal processing unit 240 may receive, from the gNB 100, guaranteed communication quality information that indicates a communication quality which can be guaranteed in a mobile communication network. In the present embodiment, the control signal and reference signal processing unit 240 may constitute a reception unit that receives guaranteed communication quality information.

The control signal and reference signal processing unit 240 may receive guaranteed communication quality information, according to a capability (Capability) of the UE 200A. The guaranteed communication quality information may include one or more parameters indicating a communication quality that is guaranteed in a mobile communication network.

For example, the control signal and reference signal processing unit 240 may receive guaranteed communication quality information including at least one of a throughput in the UE 200A, a latency amount (Latency), a throughput in a cell, a reliability, or a positioning accuracy of the UE 200A.

The control signal and reference signal processing unit 240 may transmit, to the gNB 100, an information request requesting the guaranteed communication quality information. In the present embodiment, the control signal and reference signal processing unit 240 may constitute a transmission unit that transmits the information request.

The guaranteed communication quality information, and the information request may also be transmitted using signaling at a lower layer, or using signaling at a higher layer. The gNB 100 may transmit the guaranteed communication quality information described above to the UE 200A in response to the information request transmitted from the UE 200A. Note that specific examples of the information request and the guaranteed communication quality information will be described below.

The control signal and reference signal processing unit 240 may receive, from the gNB 100, acceptance information indicating whether or not quality guaranteed communication, where a specific communication quality is guaranteed, is accepted in a mobile communication network. In the present embodiment, the control signal and reference signal processing unit 240 may constitute a reception unit that receives the acceptance information.

Quality guaranteed communication means that the mobile communication network (radio communication system 10) enables communication in a state where a specific communication quality is guaranteed. From this point of view, the quality guaranteed communication may be interpreted as accepting a connection of a High priority UE.

The acceptance information may simply indicate that the quality guaranteed communication (High priority UE) is accepted, but may also include a parameter related to the quality guaranteed communication. For example, the acceptance information may include a parameter related to a PRACH (Physical RACH) resource for High priority UEs, a cell for High priority UEs, or the like. The acceptance information may also be transmitted using signaling at a lower layer, or using signaling at a higher layer.

The control signal and reference signal processing unit 240 may receive, from the gNB 100, condition information indicating a guarantee condition for guaranteeing a specific communication quality in a mobile communication network. In the present embodiment, the control signal and reference signal processing unit 240 may constitute a reception unit that receives the condition information.

The guarantee condition can be determined on a network side. The guarantee condition (may be called a quality guarantee condition) may be interpreted as a performance or a state that the UE 200A should have in order to guarantee a specific communication quality in a mobile communication network. The performance or the state may include a reception quality (radio wave intensity, or the like) in the UE 200A, or an area where the UE 200A exists.

The control signal and reference signal processing unit 240 may transmit, to the gNB 100, unsatisfactory information indicating that the UE 200A does not satisfy the above-described guarantee condition. In the present embodiment, the control signal and reference signal processing unit 240 may constitute a transmission unit that transmits the unsatisfactory information.

Specifically, when the control unit 270 determines that the guarantee condition transmitted from the gNB 100 is not satisfied, the control signal and reference signal processing unit 240 may transmit the unsatisfactory information. The condition information and the unsatisfactory information may also be transmitted using signaling at a lower layer, or using signaling at a higher layer.

The control signal and reference signal processing unit 240 may transmit capability information indicating a terminal capability of the UE 200A to a network. In particular, in the present embodiment, the control signal and reference signal processing unit 240 can transmit UE Capability Information (see FIG. 1) related to communication quality guarantee to the gNB 100.

For example, the control signal and reference signal processing unit 240 may transmit UE Capability Information indicating whether or not a UE has a terminal capability required as a High priority UE, a communication quality level that can be supported, or the like to the gNB 100.

The encoding/decoding unit 250 performs data division/concatenation, channel coding/decoding, and the like for each predetermined communication destination (gNB 100 or another gNB).

Specifically, the encoding/decoding unit 250 divides data output from the data transmission and reception unit 260 into predetermined sizes and performs channel coding on the divided data. The encoding/decoding unit 250 also decodes data output from the modulation and demodulation unit 230, and concatinates the decoded data.

The data transmission and reception unit 260 performs transmission and reception for protocol data units (PDU) and service data units (SDU). Specifically, the data transmission and reception unit 260 performs assembly, disassembly, and the like for PDUs/SDUs in multiple layers (medium access control (MAC) layer, radio link control (RLC) layer, packet data convergence protocol (PDCP) layer, and the like). The data transmission and reception unit 260 also performs error correction and retransmission control of data, based on a hybrid ARQ (Hybrid automatic repeat request).

The control unit 270 controls each of the functional blocks configuring the UE 200A. In particular, in the present embodiment, the control unit 270 can perform a control related to a specific communication quality guarantee in a mobile communication network.

Specifically, based on a guarantee permission of a specific communication quality received from the gNB 100, the control unit 270 may assume that the specific communication quality is guaranteed for at least a specific period.

As described above, the specific communication quality may be a minimum communication quality guaranteed in a mobile communication network, or may be a graded communication quality with different levels according to a UE capability or the like. The specific period is not particularly limited, but typically may be defined by a slot unit, a half-frame unit, or the like, or may be defined by a number of seconds or the like.

The control unit 270 may configure a radio resource reserved for guaranteeing a specific communication quality, based on the guarantee permission. As described above, the radio resource reserved for guaranteeing the specific communication quality may be interpreted as a radio resource for High priority UEs, and may be interpreted as a radio resource exclusively reserved separately from radio resources for Low priority UEs (or other than High priority UEs).

The control unit 270 may assume that the specific communication quality is guaranteed for at least a specific period, based on the guaranteed communication quality information received from the gNB 100. Specifically, the control unit 270 may refer to a communication quality that can be guaranteed in a mobile communication network indicated by the guaranteed communication quality information, and assume that the communication quality is guaranteed on a condition that the UE 200A has an appropriate capability.

The control unit 270 may receive guaranteed communication quality information corresponding to the capability (Capability) of the UE 200A, and perform a configuration corresponding to the capability of the UE 200A, based on the guaranteed communication quality information. For example, the control unit 270 may reserve a radio resource required according to a guaranteed throughput, and perform a configuration using the radio resource.

As a radio resource for High priority UEs (high priority terminals) where a specific communication quality is guaranteed in a mobile communication network, the control unit 270 may perform a configuration using a radio resource distinguished from a radio resource for Low priority UEs (low priority terminals) where the specific communication quality is not guaranteed.

Examples of a radio resource distinguished as a radio resource for High priority UEs from a radio resource for Low priority UEs include the following. Specifically, the control unit 270 may perform a configuration using a cell for High priority UEs (a dedicated cell may be used). Note that in addition to the cell, a gNB, a CC, an RB, a BAND, or the like may be provided for High priority UEs.

The control unit 270 may perform an initial connection (which may be interpreted as a random access (RA) procedure) using a random access channel resource (PRACH resource) for High priority UEs. That is, a PRACH resource for High priority UEs may be different from PRACH resources for other UEs.

The control unit 270 may perform a configuration using a radio resource available only when the status of the UE 200A is a High priority UE. As described above, the status of the UE 200A (High priority UE or other than High priority UE) may be dynamically changed, and the control unit 270 may perform a configuration using a radio resource for High priority UEs when the status of the UE 200A is a High priority UE.

The control unit 270 may determine that the status of the UE 200A is a High priority UE, based on the performance of the configuration using a radio resource for High priority UEs. That is, when the configuration using a radio resource for High priority UEs is performed, the control unit 270 may implicitly determine that it is a High priority UE regardless of permission or the like as a High priority UE from a network.

When a mobile communication network accepts quality guaranteed communication, the control unit 270 may perform a connection with the mobile communication network. Specifically, the control unit 270 may determine whether or not quality guaranteed communication is accepted based on the acceptance information indicating whether or not the quality guaranteed communication is accepted.

When determining whether or not the quality guaranteed communication is accepted based on the acceptance information, the control unit 270 may determine whether or not to perform a connection with the mobile communication network according to a capability of the UE 200A. Specifically, the control unit 270 may determine whether or not the capability of the UE 200A can perform quality guaranteed communication, based on a parameter related to the quality guaranteed communication, included in the acceptance information.

The control unit 270 may perform a connection with a mobile communication network, based on a guarantee condition indicated by condition information received from the network. Specifically, the control unit 270 may determine whether or not the capability of the UE 200A can satisfy a guarantee condition for guaranteeing a specific communication quality in a mobile communication network. If the capability of the UE 200A satisfies the guarantee condition, the control unit 270 may perform a connection with the mobile communication network, and perform a radio communication where the communication quality is guaranteed.

The gNB 100 may have a function corresponding to the above-described UE 200A. Specifically, the gNB 100 (control signal and reference signal processing unit 240) may include a reception unit that receives a guarantee request from a terminal for requesting guarantee of a specific communication quality in a mobile communication network, and a transmission unit that transmits to the terminal a guarantee permission indicating that the specific communication quality is guaranteed, based on the received guarantee request.

The gNB 100 may include a reception unit that receives from a terminal an information request requesting guaranteed communication quality information indicating a communication quality that can be guaranteed in a mobile communication network, and a transmission unit that transmits to the terminal the guaranteed communication quality information, based on the information request.

The gNB 100 may include a transmission unit that transmits, to a terminal, acceptance information indicating whether or not quality guaranteed communication, where a specific communication quality is guaranteed, is accepted in a mobile communication network, and a control unit that performs a connection with a terminal requesting a connection to the mobile communication network, based on the acceptance information.

### (3) Operations of radio communication system

Next, operations of the radio communication system 10 will be described. Specifically, operations related to communication quality guarantee in the radio communication system 10 (mobile communication network) will be described.

### (3.1) Assumption and issues

As described above, a mobile communication using a public network is generally "best-effort type". Thus, a communication carrier (network operator) providing a communication service over a mobile communication network cannot control instantaneous increases in traffic. For example, if traffic increases explosively in a crowded environment, such as a concert, minimum communication quality cannot be ensured (for example, phone calls cannot be made, or websites cannot be browsed).

Mission-critical use cases (for example, URLLC) have been discussed as 5G use cases. However, if a public network is used to provide a mission-critical communication service, a desired communication quality (throughput, latency, number of concurrent connections, etc.) cannot be achieved if peripheral traffic increases as described above, or if traffic within a mission-critical communication service increases.

In particular, 6G is assumed to have many use cases that require a certain level of communication quality guarantee, such as for specific industries. Given this situation, importance of communication quality guarantee, including not only mission-critical cases but also general users, is increasing further. Whether for general users or mission-critical use cases, a mechanism that ensures "minimum communication quality" is required.

However, conventional mobile communication networks have the following fundamental issues regarding minimum quality guarantee.
· Issue (0): It is difficult to guarantee a minimum quality with finite resources.

Since frequency resources are finite, and radio base stations cannot be allocated infinitely, there is an issue whether there exists a mechanism to satisfy communication quality for all users, anyone, anytime, and anywhere.
· Issue (1): It is difficult to guarantee a minimum quality (for everyone).

If the number of temporary users is unknown, it is difficult to guarantee a minimum quality for all users with finite resources.
· Issue (2): It is difficult to guarantee a minimum quality (for anyone).

Since a minimum quality that can be ensured varies depending on the performance / type of device (UE), it is difficult to guarantee a minimum quality that can achieve a KPI (Key Performance Indicator) of services required by all users.
· Issue (3): It is difficult to guarantee a minimum quality (anytime).

Since a radio quality changes every moment due to various factors, it is impossible to ensure a specific KPI (e.g., throughput, reliability, or the like).
· Issue (4): It is difficult to guarantee a minimum quality (anywhere).

It is difficult to ensure a specific quality at any location due to factors such as limitation of the number of radio base stations that can be allocated, or surrounding communication environment.

### (3.2) Operation outlines

Hereinafter, an operation example that relates to minimum quality guarantee and can resolve the above-described issues will be described. A system for realizing the minimum quality guarantee can be realized by a network operator conditionally ensuring a predetermined quality to a user, based on a quality statistical value. A condition, a predetermined quality, and a statistical value may be assumed as follows.
· (Condition): A user for whom a minimum quality can be guaranteed is determined for each cell.

For example, in cell #1, minimum quality guarantee may be ensured only for X users (the number of UEs). When the number of users for whom the minimum quality can be guaranteed exceeds the capacity, it is acceptable not to guarantee, or to be unable to guarantee, quality.

Minimum quality guarantee may be ensured only when a reception quality such as being in a specific area and/or achieving a predetermined electric field strength (RSRP: Reference Signal Received Power, RSRQ: Reference Signal Received Quality, SINR: Signal-to-Interference plus Noise power Ratio) or the like) is satisfied. For example, an area that is difficult to cover, such as under the sea or in the air, may be excluded. It may be a condition that a UE does not enter an environment where radio waves are significantly attenuated, for example, a room surrounded by lead, or that a user does not hide an antenna part by hand.

### · (Predetermined quality)

· (Proposal 1): A network informs a UE of a minimum quality that can be ensured according to each UE capability. For example, for a Reduced UE Capability (RedCap) UE, throughput: XXX bps and delay: XXX ms may be ensured, and for an enhanced Mobile Broadband (eMBB) UE (high-end UE), throughput: YYY bps and delay: YYY ms (YYY ≥ XXX) may be ensured. A UE for URLLC may be included.
· (Proposal 2): Only a quality that can be ensured by a mandatory capability is ensured as a minimum quality. For example, eight layers MIMO x 32CC CA x 1024QAM need not always be guaranteed as a minimum quality. For example, a minimum quality achieved by four layers x 1CC x 64QAM may be guaranteed.
· (Statistical value): A statistical value of a quality achieved within a predetermined period may be ensured to be higher than a threshold value. For example, an average throughput of XXX bps per minute, and a delay of XXX ms may be ensured.

Note that an average BLER may be ensured instead of an instantaneous BLER (BLock Error Rate). It is not necessary that a predetermined quality is always achieved every single instance of a transmission and reception, and a throughput and a delay value of a minimum quality may be configured including retransmission of a block when the block is erroneous with a certain probability (for example, round trip time (may be called round trip delay)).

Even if the above-described condition, predetermined quality, and statistical value are applied, it is physically difficult to completely guarantee a minimum quality. Thus, support may be provided from a business aspect while guaranteeing a minimum quality using the system described above. For example, (a part of) a service charge may be returned to a user if the minimum quality cannot be guaranteed.

Note that the following interpretation may be applied throughout the description of the embodiments.
· (i) In at least any operational example, the following options or alternatives can be applied.
· Configuration using a higher layer parameter
· Determined by an associated higher later parameter
· Indicated by MAC CE (Control Element) or DCI
· Determined based on a UE capability
· Defined by 3GPP specifications
· May be based on a condition described in 3GPP specifications, or determined by a configuration of upper layer parameter / MAC CE / DCI, and a reported UE capability (combination of the above determinations).

Multiple options (operation examples) or alternatives may also be combined as one option or alternative throughout the description of the embodiments.
· (ii) A UE can receive the following types of information from a network (note that the network may be read as gNB.).
· Information via upper layer signaling (for example, RRC messages)
· MAC CE

It may be a MAC CE having a new LCID (Logical Channel ID) in a sub header. For example, a new octet may be introduced to extend an existing MAC CE.

### · DCI

A DCI field may be an existing DCI field or a newly introduced DCI field. An RNTI may be a CRC (Cyclic Redundancy Checksum) scrambled DCI using an existing RNTI or a newly introduced RNTI.
· UCI (Uplink Control Information) via a PUCCH or PUSCH
· A combination of the above information

Throughout the description of the embodiments, a UE may receive the following periodic information from a network.
· (Opt 1): periodically
· (Opt 2): semi-persistently (may be triggered by a UE or gNB indication)
· (Opt 3): aperiodically (may be triggered by a UE or gNB indication)

### (3.3) First embodiment

### (3.3.1) Operation example 1

In a minimum quality guarantee system, an occurrence frequency of and/or demand for a minimum quality guarantee request may be assumed to be controllable on a gNB side.

The supply and demand for minimum quality guarantee can change from moment to moment depending on area, time, or the like. Demand for a minimum quality guarantee request may be assumed to be higher in high traffic areas. In such an environment, only a limited number of users (for example, mission-critical cases) can request paid minimum quality guarantee, thereby avoiding a situation that an unspecified number of users request minimum quality guarantee.

However, even if such a mechanism is provided, measures are necessary against an occurrence of a minimum quality guarantee request that exceeds the capacity of network facilities or frequency resources. For example, the following measures are considered.
· Dynamically increase or decrease the capacity of network facilities (when using a vRAN (virtual RAN), it may be assumed that processing capacity of network facilities can be dynamically increased or decreased).
· Change a minimum quality guarantee price. By raising or lowering a minimum quality guarantee price, demand may be kept below the capacity of network facilities and frequency resources to guarantee a minimum quality of a truly mission-critical service that is highly needed.

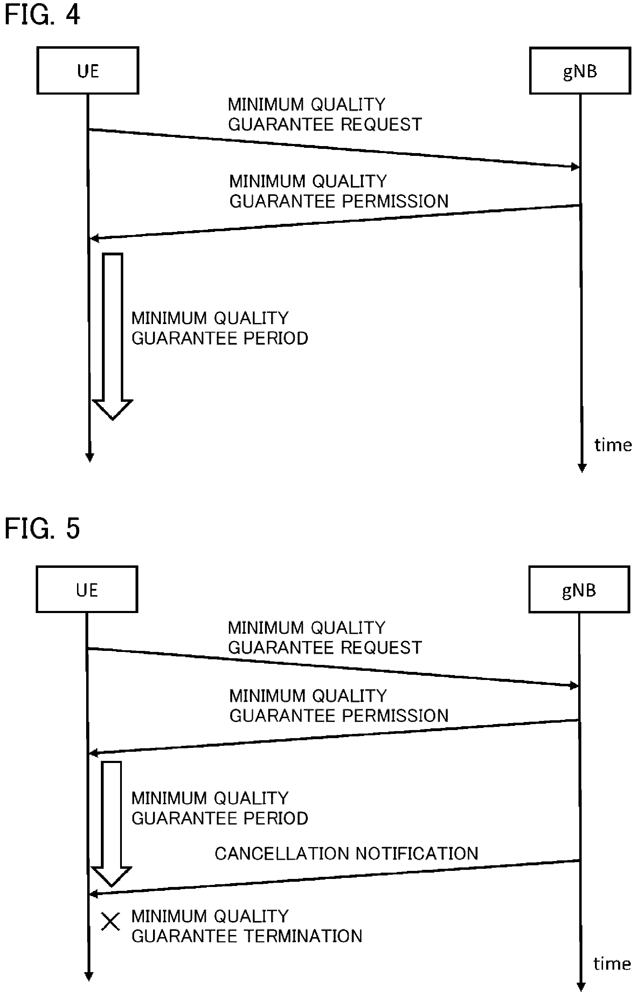

FIG. 4 illustrates a communication sequence example (part 1) between a UE and a gNB according to operation example 1. As described above, users for whom a minimum communication quality is guaranteed may be limited, but minimum quality guarantee is applied only to a UE (for example, UE #1) that requires the minimum quality guarantee (minimum quality guarantee type). The minimum quality guarantee is not applied to other UEs (for example, UE #2) (best-effort type).

The UE #1, which requires the minimum quality guarantee, may transmit a "minimum quality guarantee request" from the UE side to a gNB. The gNB applies the minimum quality guarantee only to a UE for which the "minimum quality guarantee permission" has been configured or notified by another node. In this case, the following further actions may be applied.
· (i) When traffic around an area for which a minimum quality guarantee is provided increases, the "minimum quality guarantee permission" may be revoked by network initiative. The gNB notifies a UE of the "minimum quality guarantee permission" periodically or non-periodically, and that the UE may assume that the minimum quality guarantee will be applied only upon notification (on the UE side, the fact that the "minimum quality guarantee" is applied may be displayed on a screen of the UE. Refer to operation example 4).
· (ii) Even when peripheral traffic increases, the "minimum quality guarantee permission" may not be revoked. Once a UE has received the "minimum quality guarantee permission", it may not be permitted to revoke the permission unless the UE voluntarily cancels the permission (first-mover advantage mechanism). In this case, when the UE transmits a "minimum quality guarantee cancellation request", and receives a response from a gNB, the minimum quality guarantee may be cancelled. Alternatively, the UE may periodically or non-periodically transmit a "minimum quality guarantee request", and the minimum quality guarantee may be provided only during a period when the gNB offers a permission.
· (iii) Minimum quality guarantee may be provided only for a certain period from an X symbol/slot (X ms) after the start of a minimum quality guarantee request / permission (see FIG. 4). The certain period may be defined by 3GPP specifications or configured by higher layer signaling. Alternatively, it may be reported by UE Capability Information. After the certain period has passed, the minimum quality guarantee may no longer apply. When a UE desires the minimum quality guarantee continuously, it can transmit the minimum quality guarantee request continuously, or request the minimum quality guarantee for a long period of time.

Note that in order to reduce a delay between a minimum quality guarantee request and a permission, as described above, a mechanism operating in a lower layer is useful. In contrast, when a large delay is acceptable, processing of the request and permission may be performed in a higher layer (including an application).

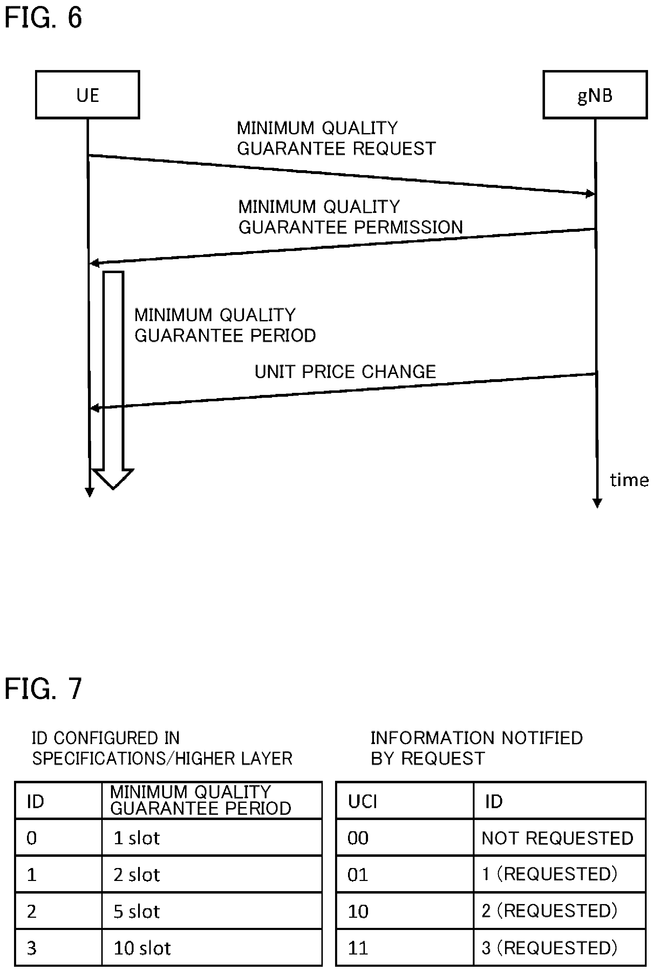

FIG. 5 illustrates a communication sequence example (part 2) between the UE and the gNB according to operation example 1. FIG. 6 illustrates a communication sequence example (part 3) between the UE and the gNB according to operation example 1.

As illustrated in FIG. 5, the minimum quality guarantee period may be canceled by the network even in the middle of the minimum quality guarantee period. When a cancellation notification is transmitted from the network, the minimum quality guarantee may be canceled after a predetermined time, symbol, or slot.

Alternatively, the UE need not assume that the network cancels the minimum quality guarantee period in the middle of the minimum quality guarantee period.

Here, it may be assumed that additional costs, or cost fluctuations, such as changes in communication unit price, required for the minimum quality guarantee do not occur within the minimum quality guarantee period. Alternatively, the network may change the cost or unit price of the minimum quality guarantee period even in the middle of the minimum quality guarantee period.

The network can change the cost or unit price even in the middle of the minimum quality guarantee period, according to a congestion condition of the network. The user (UE) may continuously ensure the minimum quality guarantee if there is no voluntary action at the time of the change.

Alternatively, the user may notify the network whether or not to continue the minimum quality guarantee at the time of change of the unit price. If there is no such notification, the minimum quality guarantee may be cancelled after a predetermined time, symbol, or slot from a unit price change instruction.

Alternatively, the user may notify the network of a cancellation request as to whether or not to cancel the minimum quality guarantee at the time of a unit price change. When canceling the minimum quality guarantee, the minimum quality guarantee may be cancelled after a predetermined time, symbol or slot from the cancellation request (if no cancellation request is given, the minimum quality guarantee may be provided continuously during the minimum quality guarantee period).

According to the present operation example, since a guarantee permission is given in response to a minimum quality guarantee request from a UE, it is possible to respond to the minimum quality guarantee corresponding to the request from the UE, and to improve the possibility of maintaining the minimum quality for the requested user.

### (3.3.2) Operation example 2

A minimum quality guarantee request may be transmitted from a UE to a gNB in the following manner. FIG. 7 illustrates a correspondence example between IDs and minimum quality guarantee requests according to operation example 2.

For information transmitted through a minimum quality guarantee request, one of the following methods may be applied.
· 1-bit information (on/off). For example, the presence or absence of a request may be notified based on whether or not a configured resource is transmitted (for example, transmit only when a request is present).
· Additional information is notified. For example, information such as a minimum quality guarantee period, a start timing, an end timing, a priority of guarantee, or a KPI value to be guaranteed (details will be described below) may be included. A candidate KPI value may be configured by 3GPP specifications or by a higher layer, and an ID corresponding to the candidate may be notified. Alternatively, a minimum quality guarantee period may be notified using an absolute time.

Regarding a physical channel or the like for transmitting a minimum quality guarantee request, any of the following methods may be applied.
· A dedicated UL resource (for example, a dedicated SR (Scheduling Request) resource, or a dedicated PUCCH resource) may be configured, and a minimum quality guarantee request may be transmitted using the configured resource.
· A minimum quality guarantee request may be transmitted using a MAC CE (may be via PUSCH. SR/PRACH may be transmitted if there is no UL transmission grant (UL grant). Alternatively, a dedicated SR resource may be configured for UL grant for transmitting a minimum quality guarantee request).

A minimum quality guarantee permission may be transmitted from a gNB to a UE using a method as follows.

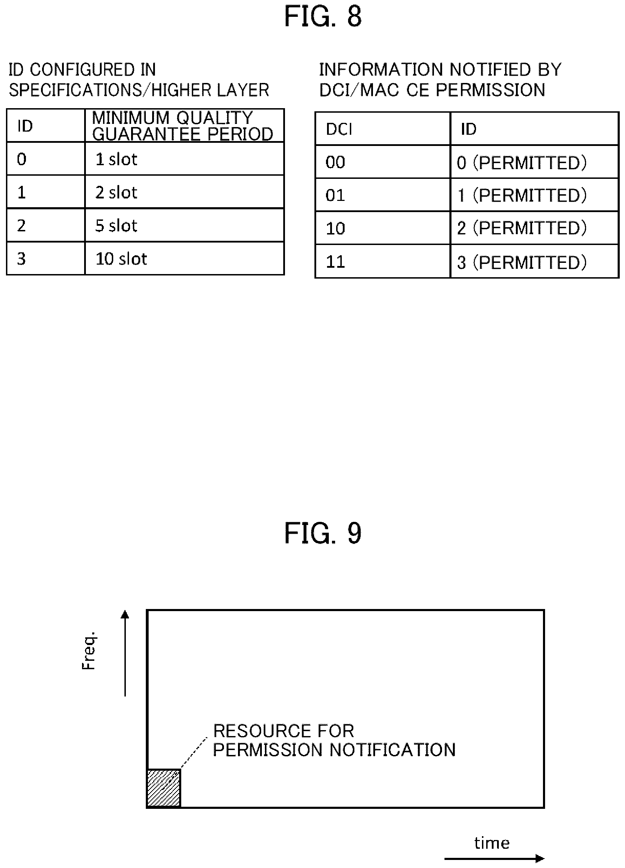

FIG. 8 illustrates a correspondence example between IDs and minimum quality guarantee permissions according to operation example 2. FIG. 9 illustrates an assignment example of a resource for a minimum quality guarantee permission notification according to operation example 2.

Any of the following methods may be applied to information transmitted through a minimum quality guarantee permission.
· 1 bit information (on/off). A predetermined DCI (for example, a DCI received in a given CORSET / Search space, a DCI CRC-scrambled by a given RNTI) may be used.
· Additional information is notified. For example, a minimum quality guarantee period, a start timing, an end timing, or information on a KPI to be ensured may be included. A candidate KPI value may be configured by 3GPP specifications or by a higher layer, and an ID corresponding to the candidate may be notified. Alternatively, a minimum quality guarantee period may be notified using an absolute time.

One of the following methods may be applied to a physical channel or the like for transmitting a minimum quality guarantee permission.
· DCI / MAC CE / RRC is used for notification.
· A dedicated DL resource (for example, a dedicated notification physical channel / RS) may be configured. A UE may perform measurement on an assumption that a guarantee permission is notified using a predetermined resource (specified by 3GPP specifications or configured by an upper layer) after transmission of a request. The UE may also determine whether or not the guarantee is permitted based on a reception result.

Notification of a guarantee permission may be turned on or off. For example, when a predetermined resource (time / frequency / code (Cyclic shift / Orthogonal Cover Code (OCC) index) is notified, and a UE detects a received signal via the predetermined resource, it may be determined that the guarantee is permitted (this is similar to each UE measuring only the resource corresponding to itself among information broadcast from a radio base station, and receiving a signal addressed to itself, as in the case of a Physical HARQ (hybrid automatic repeat request) Indicator Channel (PHICH)).
· A UE that does not receive a guarantee permission may assume that minimum quality guarantee is not permitted.

A KPI for minimum quality guarantee may be at least one of the following. Note that a combination of multiple KPIs may be applied.
· UE throughput
   · The lowest value / the highest value in UE's communication, and/or
   · Statistical value (for example, a CDF (Cumulative Distribution Function) 50% value, or a CDF 5% value.).
· Latency
   · The lowest value / the highest value in the UE's communication, and/or
   · Statistical value (example: CDF 50% value, CDF 5% value, or the like)
· Cell capacity (total throughput of all UEs in a cell)
   · The lowest value / the highest value, and/or
   · Statistical value (example: CDF 50% value, CDF 5% value, or the like)
· Reliability
   · The lowest value / the highest value in the UE's communication, and/or
   · Statistical value (example: CDF 50% value, CDF 5% value, or the like)
· Positioning
   · The lowest value / the highest value in the UE's positioning accuracy, and/or
   · Statistical value (example: CDF 50% value, CDF 5% value, or the like)

According to the present operation example, since the minimum communication quality guaranteed based on a KPI is specified, a more precise minimum quality guarantee mechanism can be provided.

### (3.3.3) Operation example 3

In order to ensure minimum quality guarantee, the following mechanism may be applied. Specifically, a part of radio resources (frequencies, time, communication devices / facilities (antenna, gNB, and the like) be preferentially or exclusively assigned to a UE under minimum quality guarantee.

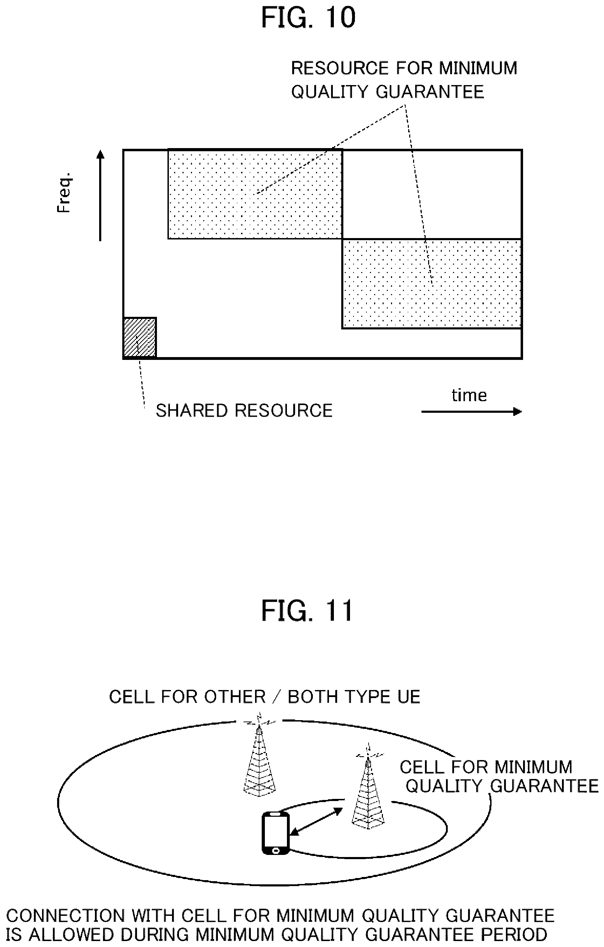

FIG. 10 illustrates an assignment example of minimum quality guarantee resources according to operation example 3. As illustrated in FIG. 10, some resources in frequency and time directions may be preferentially or exclusively used for minimum quality guarantee.

Other resources may be assigned for non-minimum quality guaranteed UEs. Alternatively, other resources may be assigned to both types of UEs, non-minimum quality guaranteed UEs and minimum quality guaranteed UEs.

For example, some resources / channels / RS may be assigned to (measured by / received by) both types of UEs. Broadcast information such as SSB (Synchronization Signal / Physical Broadcast Channel blocks) / CSI-RS / TRS / UE common PDCCH / PDSCH (PDCCH received in CSS (Common Search Space), and PDSCH scheduled by the PDCCH) / paging / MBS (Multicast and Broadcast Services)-PDSCH may be received by both types of UEs.

For other UE-specific resources (PDCCH received in UE dedicated PDCCH / PDSCH (USS (UE specific search space), and PDSCH scheduled by the PDCCH), and the like), dedicated resources for minimum quality guaranteed UEs may be assigned.

Thus, a minimum quality guaranteed UE may measure / receive a predetermined resource (time / frequency / CDM (Code Division Multiplexing / BWP / CC / CORESET (control resource sets)) only during a period of minimum quality guarantee.

FIG. 11 illustrates a configuration example of a cell for minimum quality guarantee according to operation example 3, and a cell for both types of UEs, other / non-minimum quality guaranteed UEs and minimum quality guaranteed UEs.

A predetermined cell / PCI (Physical Cell ID) / CC / BWP / TRP (Transmission Reception Point) may be used for connection / transmission and reception only by a user whose minimum communication quality is guaranteed (during a period of minimum quality guarantee).

Regarding measurement reports and beam-related reports (Measurement report / Inter cell L1 beam report), a UE may measure communication quality of both cells, a "cell for minimum quality guarantee" and a "cell for other / both types", when the minimum quality guarantee is required or configured to be measured. The UE may measure L1-RSRP / SINR / RSRQ, and/or L3-RSRP / SINR / RSRQ, and report measurement results for each cell to a gNB. Alternatively, the UE may report to the gNB a measurement result of a cell selected from measurement results of respective cells, based on a predetermined rule. Other UEs may measure a communication quality of a "cell for other / both types", and report it to the gNB.

For handover / cell (PCI cell) switching, a UE may be permitted to connect to a cell for minimum quality guarantee only when a minimum communication quality is guaranteed (during a period when the minimum quality is guaranteed). When the period when the minimum quality is guaranteed has elapsed, the UE may transmit a handover request to a "cell for other / both types", or may perform a handover, based on an instruction from a gNB.

According to the present operation example, since a dedicated resource for minimum quality guaranteed UEs, such as a cell for minimum quality guarantee, is configured, more reliable minimum quality guarantee can be realized.

### (3.3.4) Operation example 4

An additional cost required to ensure a communication quality as a minimum quality (occupancy fees for facilities, radio resources, and the like) may be borne by a UE (user) whose minimum quality is guaranteed.

As described above, a minimum quality guarantee request may be notified from a UE side to a gNB. It is desirable to provide a function (on-screen button, sliding button, or the like) for a user to voluntarily request a minimum quality guarantee request to a communication carrier. It is desirable to provide a display function for a user to recognize that a minimum quality guarantee period is in effect.

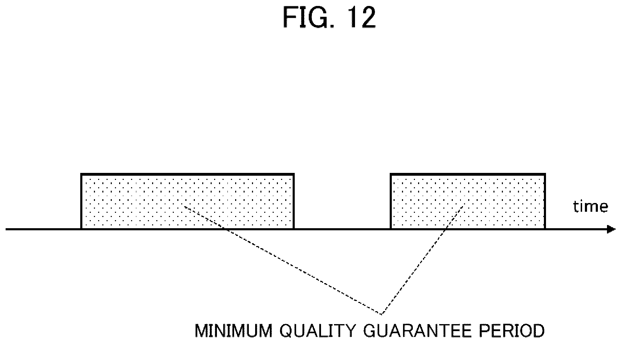

FIG. 12 illustrates an example of a minimum quality guarantee period according to operation example 4. As illustrated in FIG. 12, the minimum quality guarantee period is designated by a network in response to a request from a user (UE), and may be configured continuously or intermittently. Note that minimum quality guarantee may be applied on a premise of a guarantee request from a UE, but the guarantee request from the UE does not necessarily need to be required. That is, regardless of whether or not the network side receives a guarantee request from a UE, the minimum quality guarantee may be applied to a specific UE, based on contract information or the like of the UE.

Any of the following may be applied as a charging method for minimum quality guarantee.
· An additional charge is incurred during a minimum quality guarantee period (for example, X yen per 30 seconds).
· An additional charge is incurred during a minimum quality guarantee period and according to the time / data amount actually communicated (for example, X yen per packet).
· A charge discount is applied according to the time / data amount not actually communicated during a minimum quality guarantee period (for example, minus X yen per 30 seconds).

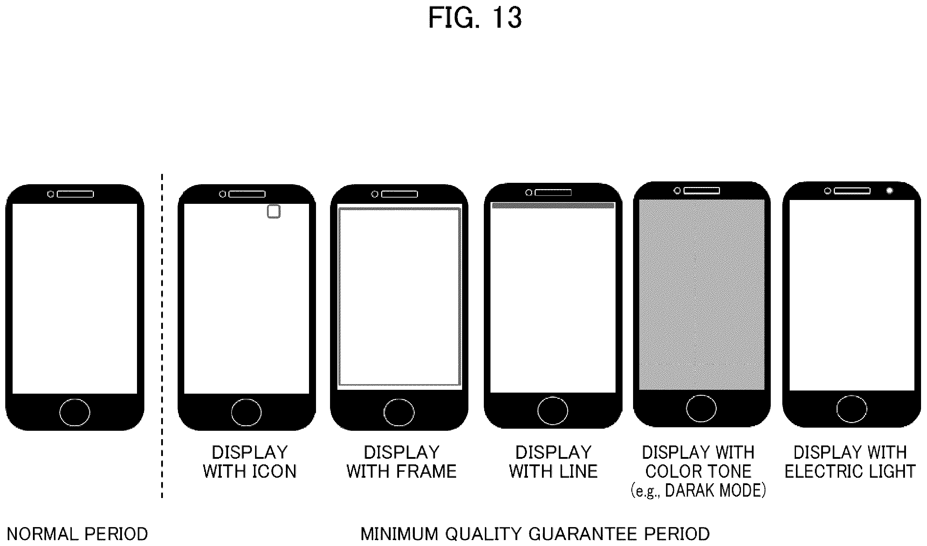

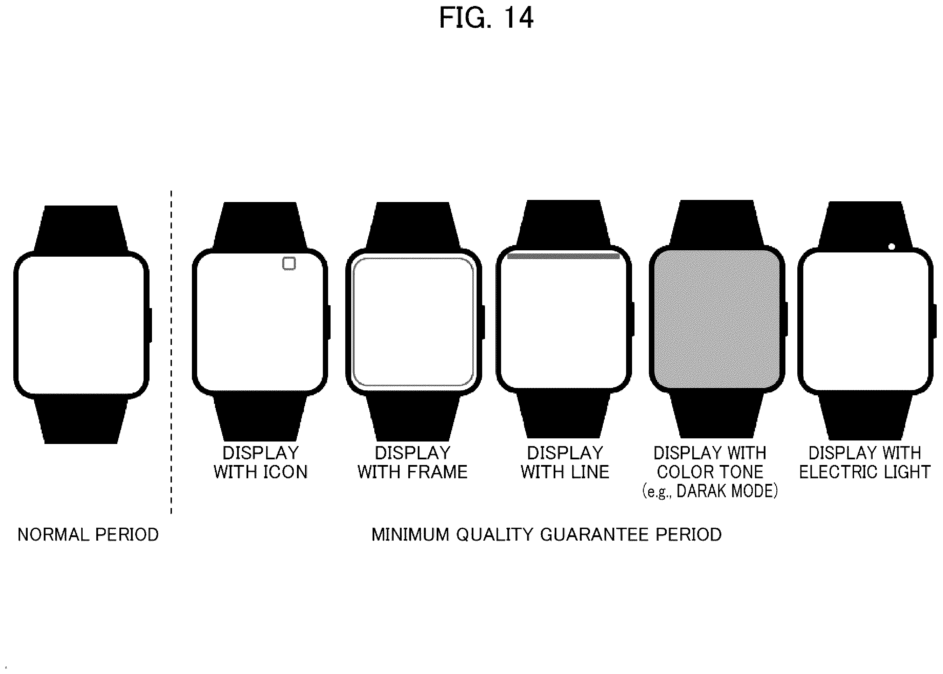

FIG. 13 illustrates a display example (smartphone) for causing a user to recognize that the user is in a minimum quality guarantee period according to operation example 4. FIG. 14 illustrates a display example (smartwatch) for causing a user to recognize that the user is in a minimum quality guarantee period according to operation example 4.

As illustrated in FIGS. 13 and 14, the user may be informed that the terminal (UE) is in a minimum quality guarantee period using a display on the screen, or a light emitting element, such as an electric light.

Note that the unit price of minimum quality guarantee may be displayed using an icon, button, flag, or the like on the screen, or the unit price may be displayed using a frame or line on the screen. Alternatively, the unit price may be displayed using a color tone on the screen.

Although FIGS. 13 and 14 illustrate examples corresponding to only two values of "normal period" and "minimum quality guarantee period", the minimum quality guarantee period may be displayed in multiple levels (for example, levels 1 to 5). In this case, each level may be displayed by a change in color tone, or may be indicated by a color, numerical value, mark, or the like. The remaining minimum quality guarantee period (for example, X seconds left) may be displayed on the screen.

According to the present operation example, since the fact that a user is in a minimum quality guarantee period is displayed on a UE in a timely manner, the user can surely recognize that minimum quality guarantee is applied.

### (3.3.5) Operation example 5

A communication quality to be guaranteed may be determined using any of the following methods.
· (Opt 1): A quality that can be (or will be) guaranteed for each UE is notified.

For example, "quality X can be guaranteed when a parameter set of Capabilities satisfies a specific condition #1", or the like may be notified. Alternatively, it may be notified that "quality Y can be guaranteed when condition #2 is satisfied" or the like, and a communication quality that can be ensured (is ensured) may be changed according to a UE capability. Thus, a higher communication quality can be guaranteed for a UE with a higher Capability.
· (Opt 2): the same quality that can be ensured (or will be ensured) is notified to all UEs.

A quality that can be guaranteed may be determined at cell levels. For example, a network may assume a quality that can be ensured, based on a mandatory capability, and notify a UE of the quality. A quality that can be ensured in the serving cell of the UE, a neighboring cell, or both the serving cell of the UE and the neighboring cell may be notified to the UE. Thus, a communication quality that can be guaranteed can be determined at the cell level, thereby simplifying the determination operation.

### (3.3.6) Operation example 6

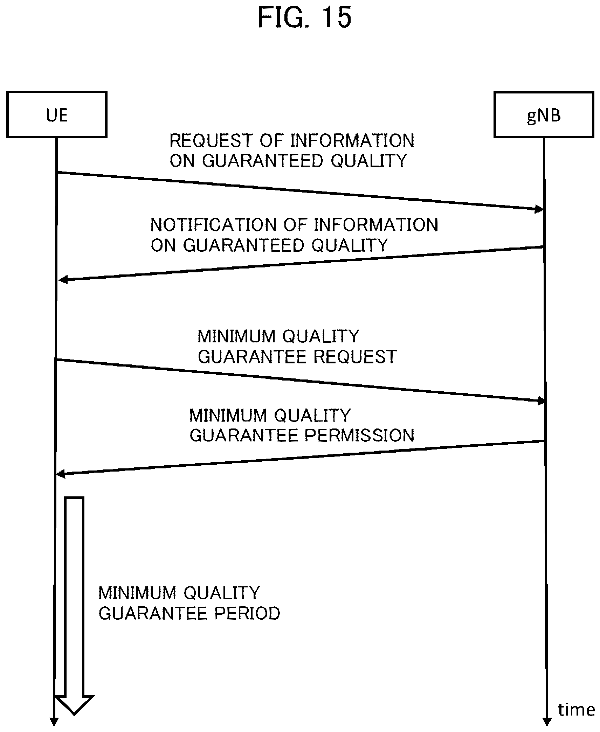

A communication quality that a network guarantees as a minimum quality may be provided to a UE through the following operation. FIG. 15 illustrates a communication sequence example (part 1) between a UE and a gNB according to operation example 6. As illustrated in FIG. 15, the UE may request information on a communication quality that the network can guarantee, on an on-demand basis.

For example, when quality guaranteed communication is started, the UE may request the network for information on a quality that can be guaranteed. At this time, the UE may be able to request quality information that can be ensured only after reporting a capability. Thus, a quality that the network can ensure can be determined based on a UE capability of each UE.

The UE may request the network for information on a quality which the UE wants to be guaranteed (below its capability) (for example, throughput: XXX bps), depending on the situation. The UE may also receive at least one of the following information from the network as a response to the request.
· Information on a quality that can be guaranteed (when a request is approved)

For example, information indicating that a throughput of XXX bps and a delay of YYY ms can be guaranteed, and information regarding an effective time of the quality guarantee may be included.
· Information on request rejection (when a request is rejected)

For example, an error cause may be included. The UE may determine that a request is rejected when there is no response from the network within a certain period of time from the request.

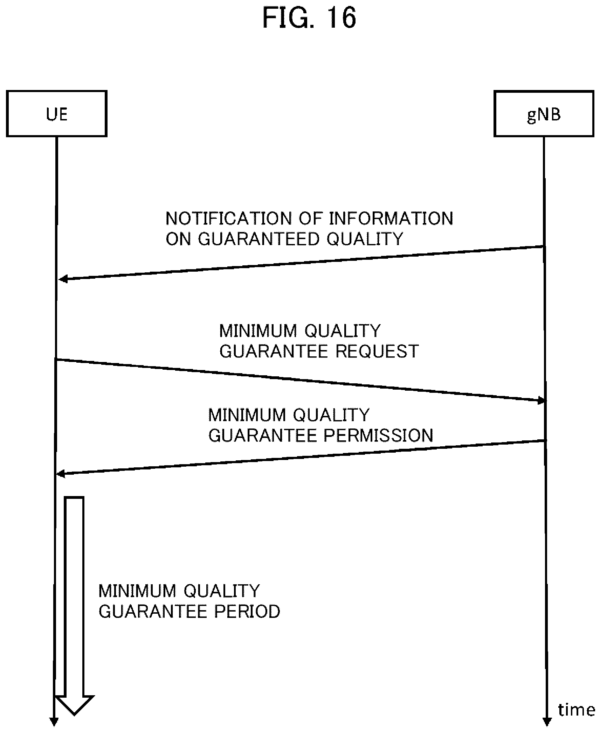

FIG. 16 illustrates a communication sequence example (part 2) between a UE and a gNB according to operation example 6. As illustrated in FIG. 16, the network may voluntarily notify the UE of information on a communication quality that the network can guarantee.

The UE may receive a communication quality guaranteed when quality guaranteed communication is initiated, using at least one of the following methods.
· System information (SIB: System Information Block, any SIB can be used.)
· Group common signaling (for example, multicast / broadcast)
· Dedicated signaling

The UE may assume that a communication quality guaranteed when quality guaranteed communication is initiated is valid for the following period.
· Certain period after X symbols / slots (X ms) after receiving a communication quality guaranteed when quality guaranteed communication is initiated.
· Period from receiving new information on the communication quality guaranteed when quality guaranteed communication is initiated until X symbols /slots (X ms) has elapsed.
· Period from receiving information on the communication quality quaranteed when quality guaranteed communication is initiated until a specific date and time (for example, 20xx, xx hours, xx minutes, xx seconds).

The UE may assume different values for X according to signaling in which quality guarantee information (guaranteed communication quality information) is received.

The UE may assume a time gap applied from notification of quality guarantee information to the start of quality guaranteed communication. For example, the UE may be notified of a value of the cap (G symbol / slot (G ms)) from the network, and the value of the gap may be uniquely defined by 3GPP specifications.

According to the present operation example, since guaranteed communication quality information is provided to the UE, the UE can take appropriate measures including availability of the quality guaranteed communication.

### (3.4) Second embodiment

In the radio communication system 10, there may be a UE (may be called an existing UE or a Low priority UE) that performs normal best-effort communication, and a UE (High priority UE) that is guaranteed a minimum quality.

In an environment where the Low priority UE and the High priority UE coexist, in order to realize a minimum quality guarantee, it is necessary to reserve sufficient resources for minimum quality guaranteed UEs. In contrast, it is necessary to accommodate existing UEs with limited resources (only resources not reserved for minimum quality guaranteed UEs), and it is not easy to satisfy both requirements.

In the present embodiment, minimum quality guarantee is realized by supporting resources available only for minimum quality guaranteed UEs, and existing UEs are accommodated with limited resources.

### (3.4.0) Operation example 0

In order to realize minimum quality guarantee, a UE may need to have a certain level of capability. For example, if quality guarantee is intended for low-end UEs such as IoT (Internet of Things) terminals, minimum quality guarantee may become difficult.

Thus, in the present operation example, a minimum capability for operating as a High priority UE may be specified. Specifically, a mandatory capability for High priority UEs may be specified by 3GPP specifications.

If a UE does not have the capability, it does not need to assume a request and an instruction to acquire a High priority UE status, and a request and initiation of minimum quality guaranteed communication. In this case, the UE may determine the capability, based on information received from the network, or it may be specified by 3GPP specifications.

According to the present operation example, a mandatory capability necessary for High priority UEs is specified, so that minimum quality guarantee for High priority UEs can be realized more reliably.

### (3.4.1) Operation example 1

Resources for minimum quality guaranteed communication may be reserved as follows.
· (Example 1): Assignable resources are reserved for High priority UEs and assigned to the UEs (may be allocated to individual UEs) by scheduling.
· (Example 2): Resources for minimum quality guaranteed communication are separately reserved.

Resources before a network determines whether a UE is a High priority UE or a Low priority UE, and resources that are not assigned to individual UEs are difficult to reserve by scheduling. Specifically, it is necessary to satisfy the following requirements.
· When initial connection (which may be interpreted as a random access procedure) is included in the scope of quality guarantee, it is necessary to reserve a resource to be used for initial connection, as for High priority UEs. Thus, cells for High priority UEs, or PRACH resources for High priority UEs may be supported.
. It is necessary to reserve a resource for transmitting a quality guarantee request (guarantee request). It is necessary to avoid a situation where minimum quality cannot be guaranteed because a quality guarantee request cannot be transmitted.

When the status of a UE dynamically changes to a High priority UE or a Low priority UE, it is also necessary to avoid reconfiguring of an RRC or the like each time the status changes. Thus, resources that can be used only by High priority UEs may be configured. In this way, resources for High priority UEs, and resources for Low priority UEs can be configured in advance, and the number of times of RRC reconfiguration can be reduced.

### (3.4.1.1) Operation example 1-1

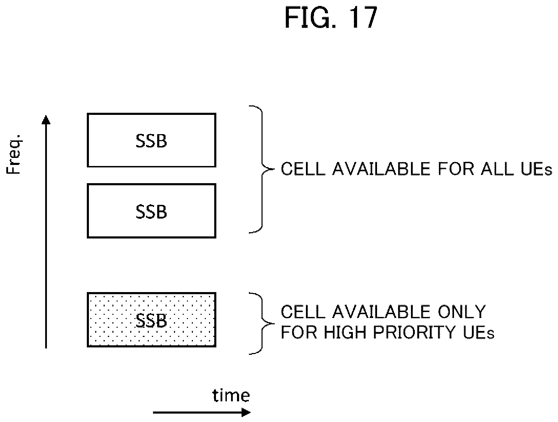

FIG. 17 illustrates a configuration example of SSBs according to operation example 1-1. As illustrated in FIG. 17, an SSB dedicated to High priority UEs (may be read as a cell, a sync signal (SS), or the like) may be supported.

A UE may be determined to be a cell/SS for High priority UEs in the following cases.

### · Specific physical cell ID (PCI)

For example, PCI 0 to X are cells for Low priority UEs (or both Low priority UEs and High priority UEs), and PCI X+1 to Y are cells for High priority UEs.
· A primary synchronization signal (PSS) is a specific sequence index
· A secondary synchronization signal (SSS) is a specific sequence index
· cell corresponding to a specific global synchronization raster index (for example, GSCN)
· cell corresponding to a specific frequency (band)

For example, a specific operational band may be assigned for High priority UEs.

Broadcast information (PBCH) of an SSB may report which SSB is for a High priority UE or a Low priority UE. For example, in a predetermined field of broadcast information of each SSB, it may be broadcasted whether the SSB is for High priority UEs or Low priority UEs.

A High priority UE may perform initial access (RACH transmission) by considering an SSB as usable, regardless of a value of the predetermined field. A Low priority UE may perform initial access (RACH transmission) regarding a usable SSB, according to a value of the predetermined field.

Note that an index corresponding to a cell dedicated to a High priority UE may be determined for each region. A Low priority UE may assume the following behaviors in a cell dedicated to High priority UEs.
· A Low priority UE cannot start random access procedure (initial connection) in the cell.
· A Low priority UE cannot transmit a signal · channel in the cell.

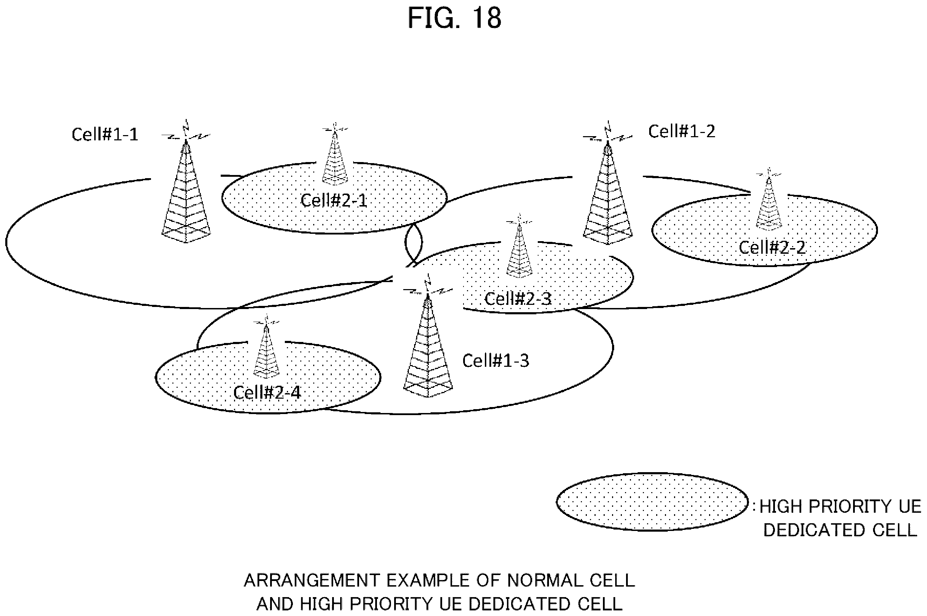

FIG. 18 illustrates an allocation example of normal cells and High priority UE dedicated cells according to operation example 1. As illustrated in FIG. 18, Cells #1-1 to 1-3 are normal cells, and Cells #2-1 to 2-x are High priority UE dedicated cells.

Since a High priority UE can be connected to more cells, the capacity for High priority UEs can be improved. Note that different PCIs may be assigned to respective cells.

In order to prevent mutual interference between cells, Cells #1-x may use PCI = 0 to (p-1), and Cells #2-x may use PCI = p to (p + q - 1). Consequently, Cells #1-x can repeatedly use p PCIs, and Cells #2-x can repeatedly use another q PCIs, thereby preventing interference between normal cells and High priority UE dedicated cells (inter-series interference).

### (3.4.1.2) Operation example 1-2

A UE may receive information on a PRACH resource for High priority UEs, and information on a resource other than the PRACH resource from the network.

Specifically, a UE may receive the information using any of the following methods.
· Receives using system information (for example, SIB1).
· Receives PRACH resource information for High priority UEs using dedicated signaling.
· Receives PRACH resource information for High priority UEs using group common signaling (for example, multicast / broadcast).

A UE may receive information indicating a PRACH preamble and/or a RACH occasion for High priority UEs and for other than the PRACH resources. For example, one type of Feature Combination may be configured for High priority UEs, and a PRACH resource associated with the feature combination may be determined to be for High priority UEs.

A Low priority UE need not perform PRACH transmission using a PRACH resource for High priority UEs. That is, the Low priority UE may perform PRACH transmission using a PRACH resource for Low priority UEs.

A High priority UE may assume the following behaviors.
· A PRACH is transmitted using a PRACH resource for High priority UEs.
· A PRACH is transmitted using a PRACH resource for High priority UEs, a PRACH resource for Low priority UEs, or both resources.

When requesting quality guarantee, a High priority UE may transmit a PRACH using a PRACH resource for High priority UEs, and when not requesting quality guarantee, may transmit a PRACH using a PRACH resource for Low priority UEs.

Note that for a PRACH resource for High priority UEs, multiple PRACH transmissions may be assumed in one transmission opportunity (Frequency Division Multiplexing (FDM), Code Division Multiplexing (CDM), or Time Division Multiplexing (TDM)).

### (3.4.1.3) Example 1-3

A UE may configure a resource that is available only when the status of the UE is a High priority UE. For example, the following resources may be included.
· Scheduling grant (Configured grant) PUSCH resource
· Scheduling request PUCCH resource
· PDCCH resource for monitoring (CORESET, search space)
· Semi-persistent PDSCH resource
· Resource for measurement and reporting

A High priority UE may be assumed to use a resource that can be used only by High priority UEs, or may be assumed to be able to use a resource other than that resource. In this way, when the status of a UE dynamically changes to a High priority UE or a Low priority UE, the number of times of RRC reconfig (reconfiguration) can be reduced by configuring a resource for High priority UEs, and a resource for Low priority UEs in advance.

### (3.4.1.3') Operation example 1-3'

A UE may determine that the status of the UE is a High priority UE when communicating with a cell dedicated to High priority UEs. The UE may determine that a High priority UE status has started at a timing as follows (for example, a symbol or slot reference).
· Timing when a random access response (RAR) corresponding to a PRACH resource dedicated to High priority UEs is received
· Timing when an initial connection is successful by transmitting a PRACH using a PRACH resource dedicated to High priority UEs
· Timing when a signal to start a High priority UE status is received
· Timing when an HARQ ACK corresponding to a PDSCH / PDCCH corresponding to a signal to start a High priority UE status is transmitted

Note that a timing when a predetermined period (for example, a predetermined period of time or a period configured / indicated by a network) has elapsed from the timing may be a timing when the High priority UE status starts.

A UE may determine that the High priority UE status has ended (for example, a symbol or slot reference) at the following timings.
· Timing when a signal indicating the end of the High priority UE status is received.
· Timing when an HARQ ACK corresponding to a PDSCH / PDCCH corresponding to a signal indicating the end of the High priority UE status is transmitted
· Timing when a predetermined period (for example, a predetermined period of time or a period configured / indicated by a network) has elapsed since the start of the High priority UE status

Note that a timing when a predetermined period (for example, a predetermined period of time or a period configured / indicated by a network) has elapsed since the timing may be a timing when the High priority UE status has ended.

According to the present operation example, since a resource for High priority UEs and a resource for Low priority UEs are configured separately, minimum quality guarantee for High priority UEs can be achieved more reliably.

### (3.4.2) Operation example 2

Since radio resources are finite, the number of UEs to be subject to quality guarantee is naturally limited. If the number of High priority UEs increases excessively, it becomes difficult to guarantee the minimum quality for all the High priority UEs. Thus, in the present operation example, the number of High priority UEs may be controlled.

In order to prevent the number of High priority UEs from increasing excessively, a network may reject new quality guaranteed communication depending on the situation.

Specifically, in order to control the number of High priority UEs, information indicating whether or not a network accepts High priority UEs (acceptance information) may be broadcasted to UEs.

A UE can receive information (acceptance information) indicating whether or not a network newly accepts quality guaranteed communication. The acceptance information may include the following information.
· Information indicating whether or not a High priority UE is newly accepted

For example, a UE may receive information indicating whether or not PRACH transmission may be performed using a PRACH resource for High priority UEs to newly start quality guaranteed communication. The UE may also receive information indicating whether or not communication may be performed via a cell for High priority UEs to newly start quality guaranteed communication.

A UE may refrain from transmitting a minimum quality guarantee request if the UE has not received the information, or if minimum quality guarantee requests have not been accepted.
· Information indicating a period during which acceptance is suspended, when new High priority UEs are not accepted

A UE may receive the information via a PBCH, or may receive the information via system information (for example, SIB1).

Note that a network does not have to broadcast that an additional (new) High priority UE is not accepted. Instead, the network may stop transmission of SS / Indication for High priority UEs, or may switch all SSs to SSs for Low priority UEs.

According to the present operation example, since a UE can perform connection to a network, or the like, only when quality guaranteed communication is accepted, the possibility of guaranteeing minimum quality to High priority UEs can be increased.

### (3.4.3) Operation example 3

In a case of a mobile communication network, especially, a location where quality can be guaranteed is limited depending on a communication environment. For example, when a High priority UE moves out of a minimum quality guaranteed area (which may be interpreted as a case where a condition determined by a network cannot be satisfied), minimum quality guaranteed communication for High priority UEs cannot be provided. When a High priority UE cannot satisfy a predetermined radio wave intensity (a case where a condition determined by a network cannot be satisfied), minimum quality guaranteed communication for High priority UEs cannot be provided.

Thus, in the present operation example, communication quality (radio quality) of a High priority UE may be controlled. Specifically, it is made possible to detect that a condition determined by a network cannot be satisfied due to movement of a UE, or the like.

In order to detect whether or not a UE satisfies a condition determined by a network, the UE may receive information (condition information) related to a quality guarantee condition from the network. The condition information may include the following information.
· A UE satisfies a predetermined radio wave intensity

For example, a UE may receive radio wave strength (L1 / L3-RSRP / SINR / RSRQ) necessary for quality guarantee.
· Existing in a predetermined area

For example, a UE may receive information on an area where quality guarantee is possible (at least one of the following: Area ID, cell Global ID, Physical cell ID, ARFCN (Absolute Radio-Frequency Channel Number), or Evolved Cell (for 4G) Global Identifier).
· A combination of the above-described information

For example, a condition may be added that enables quality guarantee when existing in a predetermined area while satisfying a predetermined radio wave intensity.

The method of receiving condition information is not particularly limited, and a UE may receive the condition information using any of the methods described in (3.2) operation outlines. When a UE does not satisfy a condition determined by a network, the UE may transmit information indicating that a quality guarantee condition is not satisfied (unsatisfied information) to the network. The method of transmitting the unsatisfied information is not particularly limited, and a UE may transmit the unsatisfied information using any of the methods described in (3.2) operation outlines.

According to the present operation example, since communication quality (radio quality) of a High priority UE can be controlled, minimum quality guarantee for High priority UEs can be ensured more reliably.

### (4) Other embodiments

Although the embodiments have been described above, the description is not limited to the embodiments, and it is obvious to those skilled in the art that various modifications and improvements are possible.

For example, although the use of 6G is assumed in the embodiments described above, the minimum quality guarantee mechanism described above may be provided in a radio communication system other than 6G, such as 5G/NR.

Although terms such as communication quality, quality, radio quality, and performance are used in the embodiments described above, these terms may be interpreted as having similar meanings.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIG. 3) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

Further, the above-described gNB 100, UE 200A and UE 200B (the devices) may function as a computer that performs processing of a radio communication method of the present disclosure. FIG. 19 is a diagram illustrating an example of a hardware configuration of the device. As illustrated in FIG. 19, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 3) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a0 central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "subcarrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

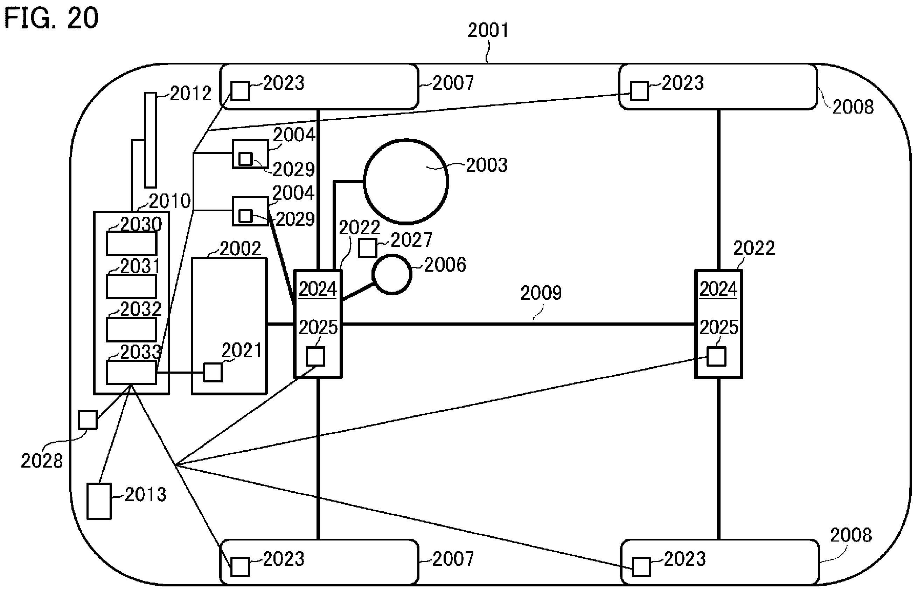

FIG. 20 shows a configuration example of a vehicle 2001. As shown in FIG. 20, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, R_AM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### (Note)

The above-described disclosure may be expressed as follows. A first feature is a terminal including: a reception unit that receives, from a radio base station, acceptance information indicating whether or not a quality guaranteed communication, where a specific communication quality is guaranteed in a mobile communication network, is accepted; and a control unit that executes a connection with the mobile communication network when the quality guaranteed communication is accepted.

A second feature is that in the first feature, the control unit determines whether or not to execute a connection with the mobile communication network, according to a capability of the terminal.

A third feature is a terminal including: a reception unit that receives, from a radio base station, condition information indicating a guarantee condition with which a specific communication quality is guaranteed in a mobile communication network; and a control unit that executes a connection with the mobile communication network, based on the guarantee condition indicated by the condition information.

A fourth feature is that in the third feature, a transmission unit is included which transmits to the radio base station unsatisfied information indicating that the terminal does not satisfy the guarantee condition.

### Reference Signs List

10 Radio communication system
20 RAN
100 gNB
200A, 200B UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Revolution sensor
2023 Pneumatic sensor2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

## Claims

1. A terminal comprising:
a reception unit that receives, from a radio base station, acceptance information indicating whether or not a quality guaranteed communication, where a specific communication quality is guaranteed in a mobile communication network, is accepted; and
a control unit that executes a connection with the mobile communication network when the quality guaranteed communication is accepted.

2. The terminal according to claim 1, wherein the control unit determines whether or not to execute a connection with the mobile communication network, according to a capability of the terminal.

3. A terminal comprising:
a reception unit that receives, from a radio base station, condition information indicating a guarantee condition with which a specific communication quality is guaranteed in a mobile communication network; and
a control unit that executes a connection with the mobile communication network, based on the guarantee condition indicated by the condition information.

4. The terminal according to claim 3, further comprising: a transmission unit that transmits to the radio base station unsatisfied information indicating that the terminal does not satisfy the guarantee condition.

5. A radio base station comprising:
a transmission unit that transmits to a terminal acceptance information indicating whether or not a quality guaranteed communication, where a specific communication quality is guaranteed in a mobile communication network, is accepted; and
a control unit that executes a connection with the terminal, which requests, based on the acceptance information, a connection with the mobile communication network.

6. A radio communication method comprising:
a step of receiving, from a radio base station, acceptance information indicating whether or not a quality guaranteed communication, where a specific communication quality is guaranteed in a mobile communication network, is accepted; and
a step of executing a connection with the mobile communication network when the quality guaranteed communication is accepted.
